# EUROPEAN PATENT SPECIFICATION

(11) **EP 1 961 613 B1**
(45) Date of publication and mention of the grant of the patent: **09.10.2013**
(21) Application number: 08003040.6
(22) Date of filing: 19.02.2008
(51) Int. Cl.: B60R 1/00, G02B 27/01, G06T 3/00, H04N 7/18

(54) **Driving support method and driving support device**
Verfahren und Vorrichtung zur Fahrunterstützung
Procédé d'assistance à la conduite et dispositif d'assistance à la conduite

(30) Priority: 23.02.2007 JP 2007044403; 07.08.2007 JP 2007205671
(43) Date of publication of application: 27.08.2008
(73) Proprietor: Aisin AW Co., Ltd., Fuji-cho Anjo-shi Aichi 444-1192 (JP)
(72) Inventor: Kubota, Tomoki, Okazaki-shi Aichi 444-8564 (JP); Okabe, Hidefumi, Okazaki-shi Aichi 444-8564 (JP); Takagi, Minoru, Okazaki-shi Aichi 444-8564 (JP)
(74) Representative: Kramer - Barske - Schmidtchen

(56) References cited:
- JP-A- 2005 125 828
- JP-A- 2006 044 596
- JP-A- 2006 290 304
- JP-A- 2007 104 537
- US-A1- 2007 081 262

## Description

### BACKGROUND OF THE INVENTION

### 1. Field of the Invention

The present invention relates to a driving support method and a driving support device.

### 2. Description of the Related Art

Known conventional devices for supporting safe driving include the development of an onboard system that uses an onboard camera to take images of an area, namely, a driver's blind spot, and displays such images on a display or the like. One such proposed system uses an onboard camera to take images of blind spot areas caused by a front pillar of a vehicle, and displays the images taken on an inner side of the front pillar. The front pillar denotes right and left supporting columns that support a front windshield and a roof. The front pillar is positioned in front and off to the side when viewed by a driver sitting in a driver seat. Although the front pillar partially obstructs the driver's field of view, it is a member that is essential for securing a predetermined thickness for safety.

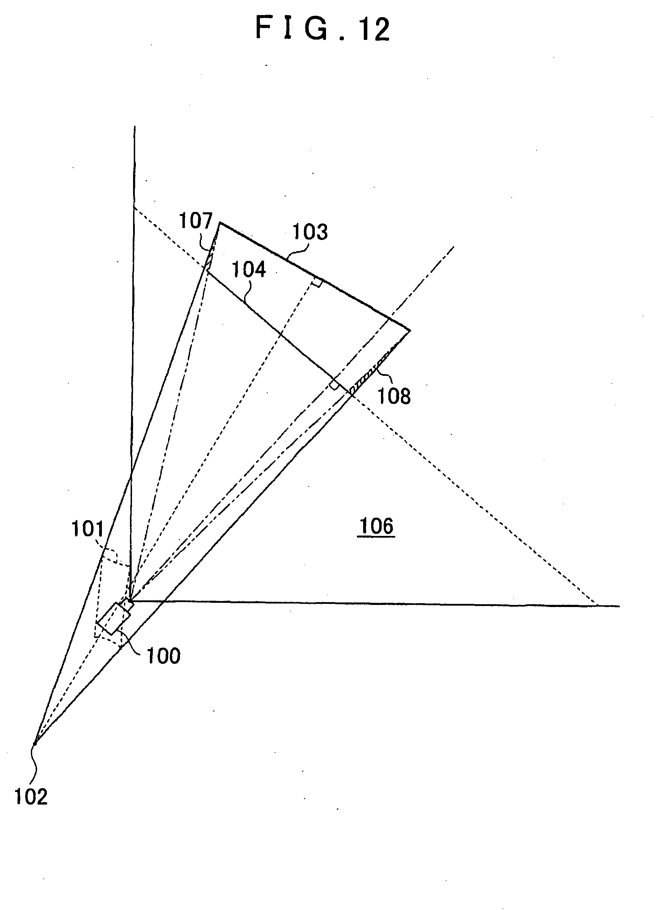

Referring to FIG. 12, the system described above includes a camera 100 that is attached to a vehicle body and capable of taking an image of an image area 106, an image processor that performs image processing with respect to image signals output from the camera 100, and a projector that projects an image on an inner side of a front pillar 101 (neither of which is shown). Accordingly, as viewed from a driver position 102, a state is achieved in which an outside background appears visible through the front pillar 101. Therefore at intersections or the like, it is possible to check for obstacles and the shape of the road in a diagonally forward direction of the vehicle.

When an image signal taken by the camera 100 is projected on the pillar 101, however, the viewing angle of the camera 100 does not completely coincide with the viewing angle of the driver. Therefore, a problem arises in which the image projected on the pillar 101 is offset and askew with respect to the background as viewed by the driver through a window. As a countermeasure, Japanese Patent Application Publication No. JP-A-2005-184225 discloses projection transformation of an image taken by a camera onto a virtual plane (virtual screen plane) set to align with the driver's viewing angle.

JP 2006 290304 A discloses a method and a device for displaying the outside of a vehicle, wherein an image picking up the outside scene of a vehicle is picked up as a camera viewpoint image, and a viewpoint detection step of detecting the viewpoint of a driver is performed.

JP 2005 125828 A discloses a system that photographs image region information located in front of a travelling vehicle by a photographing camera and detects a visual line position of a driver by a visual line position detecting camera.

JP 2006 044596 A discloses a display device for a vehicle which is provided with an outdoor camera for photographing a periphery of the vehicle, a view recognition unit for recognizing a spatial position of the view of the driver seated on a driver's seat, an image data processing device for producing outdoor scene which should be projected to eyes of the driver when it is assumed that a shutting off article such as a side pillar and a door for shutting off a visual field of the driver is transparent by processing peripheral image data obtained by the outdoor camera in response to the recognition result of the view recognition unit, and displays for displaying the image produced by the image data processing device. The displays are mounted to the shutting off article such as a pillar.

JP 2007 104537 A discloses an in-vehicle dead angle video image display device comprising a monitor which is installed in a vehicle cabin at the front pillar side of the vehicle.

US 2007/081262 A1 discloses an apparatus for displaying an image of a blind spot area to which the driver's view is obstructed by a pillar, including: an monitor on the pillar, a camera to take an image of a peripheral area including the blind spot area, and an image converting device to convert the camera image and create an output image to be displayed on the monitor.

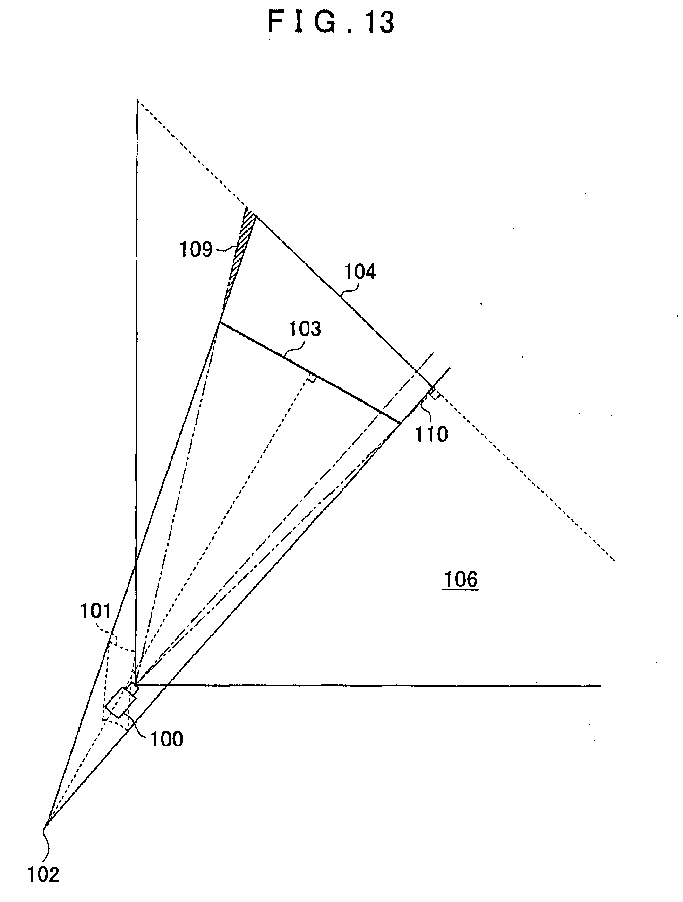

However, to determine a focal point of the camera 100, as shown in FIG. 12 for example, an imaged plane 104 that indicates the focal point is in front of a virtual plane 103. But regardless of how close the imaged plane 104 is set to the virtual plane 103, areas 107, 108 that are not projected on the virtual plane 103 occur so long as the imaged plane 104 and the virtual plane 103 are separated. In addition, as FIG. 13 shows, setting the imaged plane 104 at a position farther away from the driver position 102 than the virtual plane 103 means that areas 109, 110 between the imaged plane 104 and the virtual plane 103 are not projected on the pillar, resulting in waste.

The present invention was devised in view of the foregoing problems, and it is an object of the present invention to provide a driving support method and a driving support device that are capable of projecting an image that feels natural to a driver on a pillar.

According to the first aspect of the invention, the imaged plane of the imaging device is set at a position that passes through an end point of the virtual plane.
Therefore, it is possible to display a clear and natural image with high continuity that reduces a non-displayed area not projected on the pillar and an excess area of the image taken.

According to the second aspect of the invention, the driving support device sets the imaged plane of the imaging device at a position that passes through an end point of the virtual plane. Therefore, it is possible to display a clear and natural image with high continuity that reduces a non-displayed area not projected on the pillar and an excess area of the image taken.

According to the third aspect of the invention, the imaged plane of the imaging device is set at a position closer to the vehicle than the virtual plane. Therefore, it is possible to display a clear and natural image with high continuity that is not focused on an excess area.

According to the fourth aspect of the invention, the end point through which the imaged plane passes through is changed depending on the orientation of the optical axis of the imaging device and the orientation of the linear line linking the head position of the driver of the vehicle and the position of the depicted reference object. Therefore, the imaged plane can always be set in front of the virtual plane.

### BRIEF DESCRIPTION OF THE DRAWINGS

FIG. 1 is a block diagram of a driving support system according to an embodiment;
FIG. 2 is an explanatory drawing of a position detecting sensor that detects a head portion of a driver;
FIG. 3 is an explanatory drawing of an attachment position of a camera;
FIG. 4 is an explanatory drawing of a setting position of a virtual plane;
FIG. 5 is an explanatory drawing of the virtual plane and a camera imaged plane;
FIG. 6 is an explanatory drawing of the virtual plane and a camera imaged plane;
FIG. 7 is an explanatory drawing of mask pattern;
FIG. 8 is a side view of a vehicle for explaining a position of a projector;
FIG. 9 is a frontal view for explaining a pillar inner surface onto which an image is projected;
FIG. 10 is an explanatory drawing for explaining a projection direction of the projector;
FIG. 11 is an explanatory drawing of a processing procedure according to the embodiment;
FIG. 12 is an explanatory drawing of a conventional virtual plane position; and FIG. 13 is an explanatory drawing of a conventional camera imaged plane.

### DETAILED DESCRIPTION OF THE PREFERRED EMBODIMENTS

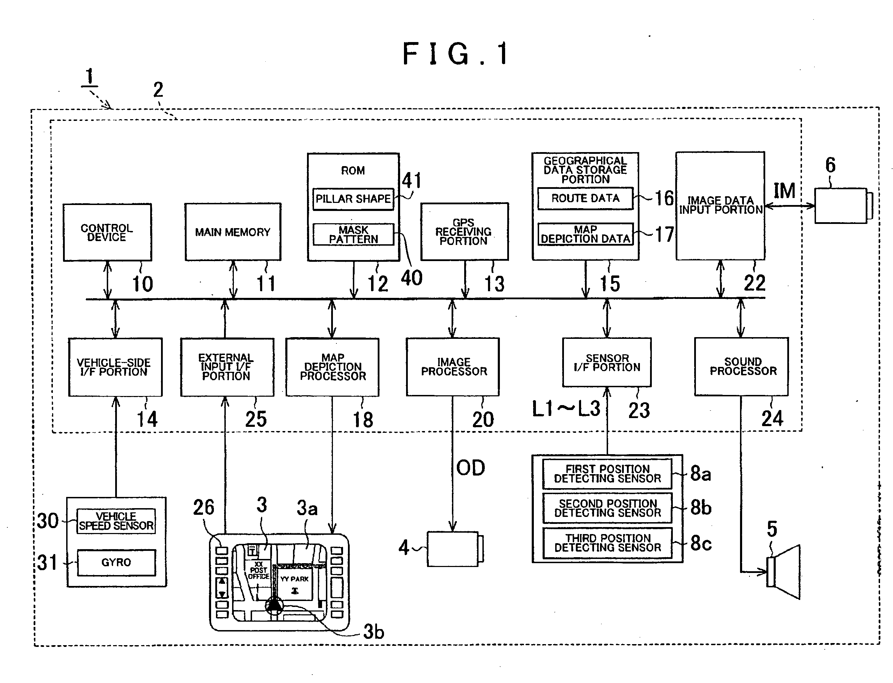

Hereinafter, an embodiment realizing the present invention will be described with reference to FIGS. 1 to 11. FIG. 1 is a block diagram that explains the structure of a driving support system 1 mounted in an automobile.

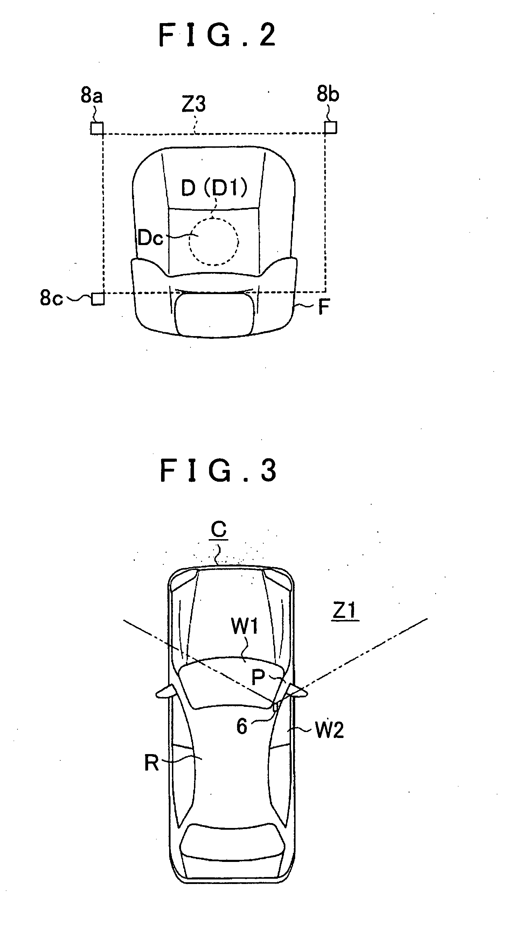

The driving support system 1 is mounted in a vehicle C (see FIG. 3), and includes a driving support unit 2 serving as a driving support device, a display 3, a projector 4 serving as a projection device, a speaker 5, a camera 6 serving as an imaging device, and first to third position detecting sensors 8a to 8c.

The driving support unit 2 includes a control portion 10, a nonvolatile main memory 11, a ROM 12, and a GPS receiving portion 13. The control portion 10 is a CPU, MPU, ASIC or the like, and performs a main control of respective processing in accordance with a driving support program stored in the ROM 12. The main memory 11 temporarily stores calculation results from the control portion 10.

The control portion 10 obtains satellite orbit information and time information received by the GPS receiving portion 13 from a GPS satellite, and calculates an absolute position of the host vehicle based on electric navigation. The control portion 10 respectively inputs a vehicle speed pulse and an angular velocity from a vehicle speed sensor 30 and a gyro 31 provided in the vehicle C, via a vehicle-side I/F portion 14 of the driving support unit 2. The control portion 10 then calculates a relative position from a reference position based on autonomous navigation using the vehicle speed pulse and the angular velocity, and uses this in combination with the absolute position calculated by electric navigation to identify the host vehicle position.

The driving support unit 2 also includes a geographical data storage portion 15. The geographical data storage portion 15 is an internal hard disk, or an external storage medium such as an optical disk. Stored in the geographical data storage portion 15 are respective route data network data (hereinafter referred to as route data 16) serving as map data for searching a route to a destination, and respective map depiction data 17 serving as map data for outputting a map screen 3 a to a display 3.

The route data 16 are data pertaining to roads within a mesh that defines the entire country. The route data 16 includes node data pertaining to nodes that indicate respective mesh identifiers, intersections and road end points, and data such as respective link identifiers and link costs connected to the respective nodes. The control portion 10 uses such route data 16 to search for a recommended route to a destination and determines whether the vehicle C is approaching a guidance point such as an intersection.

The map depiction data 17 are data for depicting a road shape, background or the like, and are stored for each mesh, which together divide up a map of the entire country. Stored in the map depiction data 17 are data pertaining to road markings such as center lines, white lines that define roadside zones, zebra zones and crosswalks, and installations on roads such as traffic signals. More specifically, types of road markings, position coordinates for road markings, types of road installations, positions coordinates for road installations and the like are associated with intersections and curves at respective points and stored.

Referring to FIG. 1 again, the driving support unit 2 includes a map depiction processor 18. The map depiction processor 18 reads out map depiction data 17 for depicting a map of the host vehicle surroundings from the geographical data storage portion 15. The map depiction processor 18 then generates map output data, and displays the map screen 3a based on the map output data on the display 3. In addition, the map depiction processor 18 superimposes a host vehicle position indicator 3b that shows the host vehicle positions on the map screen 3a.

In addition, the driving support unit 2 includes a sound processor 24. The sound processor 24 has a sound file (not shown) and outputs, for example, audio that gives guidance regarding a route to a destination from a speaker 5. Furthermore, the driving support unit 2 includes an external input I/F portion 25. The external input I/F portion 25 inputs an input signal based on a user's input operation from a touch panel type display 3 and an operation switch 26 adjacent to the display 3, and outputs to the control portion 10.

The driving support unit 2 also includes a sensor I/F portion 23 that structures a detecting mechanism. The sensor I/F portion 23 inputs detection signals from the first to third position detecting sensors 8a to 8c. The first to third position detecting sensors 8a to 8c are structured from ultrasonic sensors, and as shown in FIG. 2, are installed within a vehicle cabin around a driver D sitting in a front seat F. The first position detecting sensor 8a is installed near a room mirror (not shown), and is positioned at nearly the same height as a head portion D1 of the driver D, or otherwise at a somewhat high position.

The second position detecting sensor 8b is attached near an upper end of a door window W2 (see FIG. 3) so as to be positioned on a diagonally front-right side of the driver D. The third position detecting sensor 8c is attached on an inner side of a roof R, which is a left side of the front seat F. Ultrasonic waves sent from sensor heads (not shown) of the respective position detecting sensors 8a to 8c are reflected to the head portion D1 of the driver D. The position detecting sensors 8a to 8c measure a time from sending of an ultrasonic wave to receiving of a reflected wave, and based on the measured time, each calculates respective relative distances to the head portion D 1.
The calculated respective relative distances are output to the control portion 10 via the sensor I/F portion 23. Note that the relative distance to the head portion D 1 may be calculated by the sensor I/F portion 23 based on signals from the respective position detecting sensors 8a to 8c.

While the driver D is seated in the driver seat, the control portion 10 uses triangulation or the like and obtains a head position, i.e., a head center position Dc, through a known method, based on a head movement range in which the head portion D1 of a driver D of standard build is capable of moving and based on the respective relative distances detected by the first to third position detecting sensors 8a to 8c.

Referring to FIG. 1 again, the driving support unit 2 includes an image data input portion 22, as well as an image processor 20 that serves as a virtual plane setting mechanism, an imaged plane setting mechanism, an image processing mechanism, and an output control mechanism. Based on the control of the control portion 10, the image data input portion 22 drives the camera 6 provided in the vehicle C and inputs image data IM taken by the camera 6.

The camera 6 is a camera that images a color image. In addition, the camera 6 includes: an optical mechanism structured from a lens, a mirror, and the like; a CCD imaging element (neither of which is shown); and an automatic focusing mechanism. As FIG. 3 shows, the camera 6 is attached to an outer side of a front pillar P (hereinafter simply referred to as a pillar P) of the vehicle C, such that an optical axis thereof faces the front of the vehicle C. In the present embodiment, the camera 6 is aligned with the driver seat disposed on the vehicle right side and attached to the pillar P on the right side of the driver seat side. The camera 6 images a background of an imaging area Z1 that includes the front-right side of the vehicle C and a portion of the right side of the vehicle C.

The image processor 20 of the driving support unit 2 obtains the image data IM from the camera 6 via the image data input portion 22. In addition, the image processor 20 trims an area blocked by the pillar P among the obtained image data IM and performs image processing for eliminating image distortion.

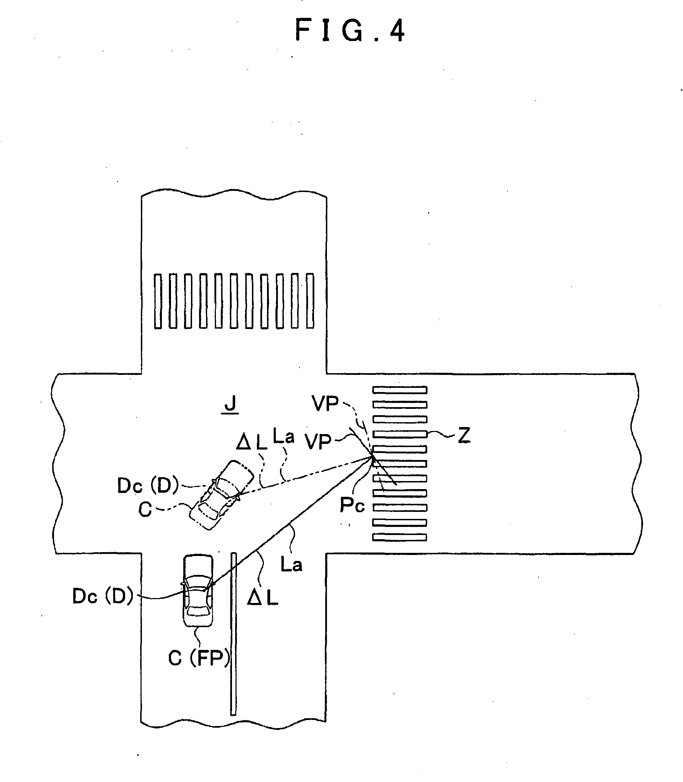

More specifically, if the control portion 10 determines that the vehicle C has reached an intersection or a curve based on the route data 16, then the image processor 20 obtains coordinates for a visible target object that is easy for the driver D to watch at the intersection or curve. In the present embodiment, the image processor 20 obtains coordinates for a depiction reference object, i.e., a crosswalk Z, based on the map depiction data 17. For example, as shown in FIG. 4, coordinates for a reference point Pc of the crosswalk Z marked on the vehicle front side are obtained based on the map depiction data 17. The reference point Pc is either stored in advance in the map depiction data 17 or set by the image processor 20 from the coordinates of the entire crosswalk Z stored in the map depiction data 17.

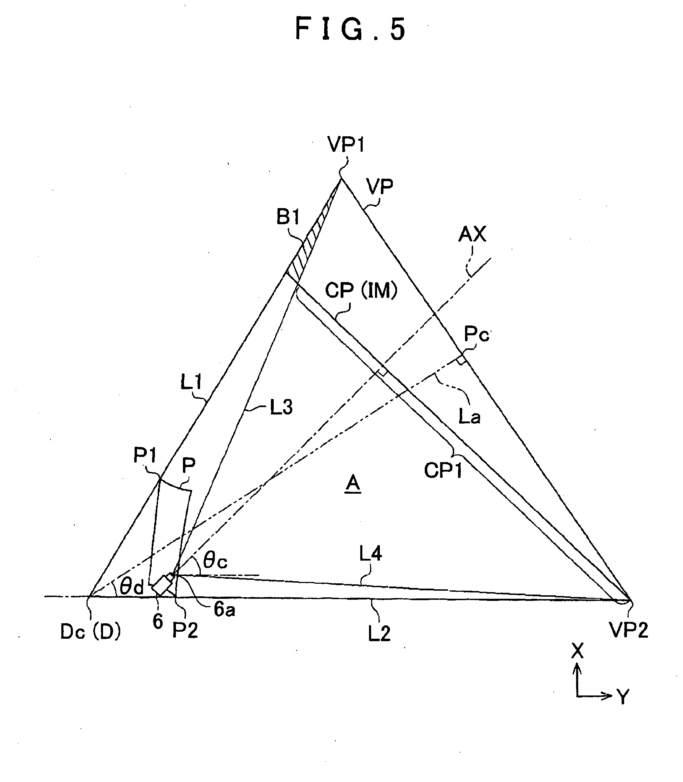

Once the coordinates of the reference point Pc are obtained, the position of a virtual plane VP are determined based on the coordinates of the reference point Pc and the head center position Dc of the driver D, which was detected by the first to third position detecting sensors 8a to 8c. The virtual plane VP is a plane onto which an image taken by the camera 6 is projected. Furthermore, an object on which the virtual plane VP is set has a property that enables display without offsetting or skewing when the image data IM taken by the camera 6 is transformed into coordinates on the virtual plane VP. As FIG. 5 shows, the image processor 20 sets the virtual plane VP at a position that includes the reference point Pc and is perpendicular to a center line La linking the head center position Dc and the reference point Pc. The image processor 20 also provides the virtual plane VP on an inner side of a blind spot area A, which is defined by tangent lines L1, L2 that pass through end points P1, P2 of the pillar P and the head center position Dc of the driver D, respectively.

As shown in FIG. 4, the vehicle C moves from a first position FP at which the virtual plane VP was set to a position indicated by a two-dotted broken line in the figure, which changes a relative distance ΔL between the head center position Dc and the reference point Pc of the crosswalk Z. Even in such case, the image processor 20 sets the virtual plane VP at a position that passes through the reference point Pc and is perpendicular to the center line La. In other words, the virtual plane VP is not moved in connection with the forward travel of the vehicle C and is always set to a position that passes through the reference point Pc. As shown in FIG. 4, turning of the vehicle changes the slope of the center line La linking the head center position Dc and the reference point Pc, and such a change is accompanied only by a change in the angle of the virtual plane VP.

In addition, the image processor 20 determines an imaged plane CP in accordance with the position of the virtual plane VP. The imaged plane CP indicates a focal point of the camera 6 and is represented by a plane perpendicular to an optical axis AX of the camera 6. As FIG. 5 shows, the image processor 20 sets the imaged plane CP at a position (a predetermined position) that is closer to the vehicle C than the virtual plane VP and that intersects a left end point VP 1 or a right end point VP2 of the virtual plane VP defined by the blind spot area A. Here, the head center position Dc of the driver D is used as a reference to set the imaged plane CP at a position close to the head center position Dc. Also note that the respective end points VP1, VP2 are intersection points between the virtual plane VP and the tangent lines L1, L2 respectively linking the head center position Dc with the end points P1, P2 of the pillar P.

To explain the method for setting the imaged plane CP in more detail, first, the image processor 20 compares the orientation of the optical axis AX of the camera 6 and the orientation of the center line La linking the head center position Dc and the reference point Pc. Namely, an angle θc formed by the optical axis AX and the horizontal direction (a Y-arrow direction) and an angle θd formed by the center line La and the horizontal direction (the Y-arrow direction) are calculated. Then, the magnitude of the angle θc of the optical axis AX and the magnitude of the angle θd of the center line La are compared. It should be further noted that an X-arrow direction is a direction parallel to the lengthwise direction of the vehicle C, and that the Y-arrow direction is a direction perpendicular to the X-arrow direction, i.e., the vehicle width direction.

As FIG 5 shows, if the angle θc of the optical axis AX is larger than the angle θ d of the center line La (θc>θd), then the imaged plane CP must be set to a position that passes through the right end point VP2 in order to set the imaged plane CP at a position that meets the above conditions. In other words, setting the imaged plane CP at a position that passes through the left end point VP1 results in setting the imaged plane CP at a position farther from the head center position Dc than the virtual plane VP. Therefore, the image processor 20 sets the imaged plane CP at a position that passes through the right end point VP2 of the virtual plane VP.

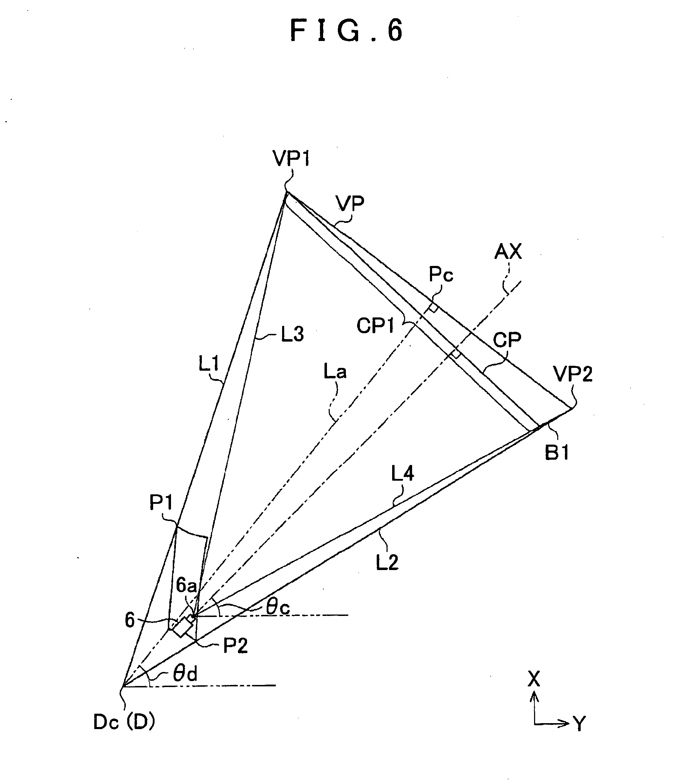

As FIG. 6 shows, if the angle θc of the optical axis AX is smaller than the angle θ d of the center line La (θc<θd), then the image processor 20 sets the imaged plane CP at a position that passes through the left end point VP1 of the virtual plane VP.

If the angle θc of the optical axis AX is equal to the angle θd of the center line La, i.e., if the optical axis AX and the center line La are overlapped, then the imaged plane CP and the virtual plane VP can be overlapped. Therefore, the imaged plane CP is set to the position of the virtual plane VP.

Once the imaged plane CP is set, the image processor 20 obtains the image data IM that was taken aligned with the focal point of the camera 6 on the imaged plane CP, via the image data input portion 22.

After the image data IM is obtained, a projection portion CP1 to be projected on the virtual plane VP is trimmed to generate pillar blind spot data BD. Namely, as FIG 5 shows, the image processor 20 trims the projection portion CP1 between respective linear lines L3, L4 linking a camera position 6a and the end points VP1, VP2. Data containing the trimmed projection portion CP1 becomes the pillar blind spot data BD.

Once the pillar blind spot data BD is obtained, the image processor 20 performs projection transformation of the pillar blind spot data BD onto the virtual plane VP. Such projection transformation is processing that transforms the coordinates of pixels of the projection portion CP1 into coordinates for pixels on the virtual plane VP.

In addition, the image processor 20 transforms the image, which was transformed and projected on the virtual plane VP, for projection on a pillar surface that includes an inner side surface Pa of the pillar P. The pillar surface can be set based on three-dimensional coordinates of a pillar shape 41 (see FIG. 1) stored in the ROM 12. It should be noted that the pillar shape 41 is data that specifies an outer shape of the pillar P using a pattern or coordinates, and such data differs depending on the vehicle model. The image processor 20, based on the pillar shape 41, can obtain three-dimensional coordinates for the length direction, vehicle width direction, and vertical direction, which specify the outer shape of the pillar P. Furthermore, the width and length of the pillar P can also be obtained as data using three-dimensional coordinates.

Next in order for the projector 4 to project the above image that has been projected on the pillar surface in line with the position and shape of the pillar P, the coordinates of the image are transformed to align with the position of the projector 4. Namely, the image displayed on the inner side surface Pa is distorted, enlarged, or reduced depending on the angle of incidence of light output from the projector 4 on the inner side surface Pa of the pillar P. Accordingly, for example, a map pre-associating the coordinates of the pixels of the image subject to projection transformation and the coordinates of the pixels of the image output to the projector 4 is stored in advance in the main memory 11 or the like. Based on such a map, the image subjected to projection transformation is further subjected to coordinate transformation as an output image to the projector 4. Projection data PD is then generated to output the image subjected to coordinate transformation to the projector 4.

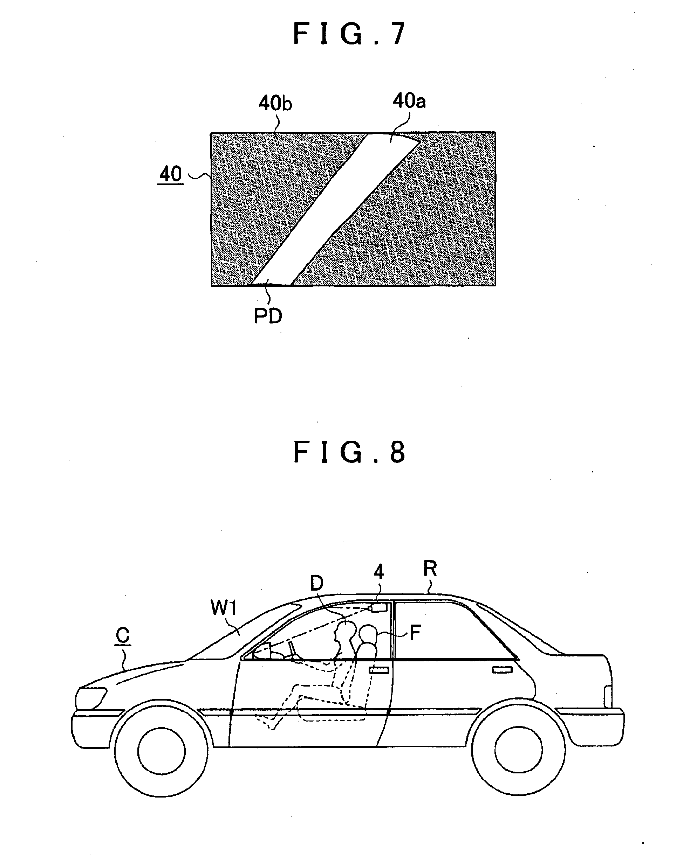

In addition, the image processor 20 generates an image signal with respect to the projection data PD for output to the projector 4, based on a mask pattern 40 (see FIGS. 1 and 7) stored in the ROM 12. Referring to FIG. 7, the mask pattern 40 is data for applying a mask to the projection data PD, and is formed from an image display area 40a along an inner surface shape of the pillar P, and a mask 40b. The image processor 20 reads the projection data PD in the region of the image display area 40a, and generates output data OD so that the projector 4 does not display the region of the mask 40b. Once the output data OD is generated, the image processor 20 outputs such output data OD to the projector 4.

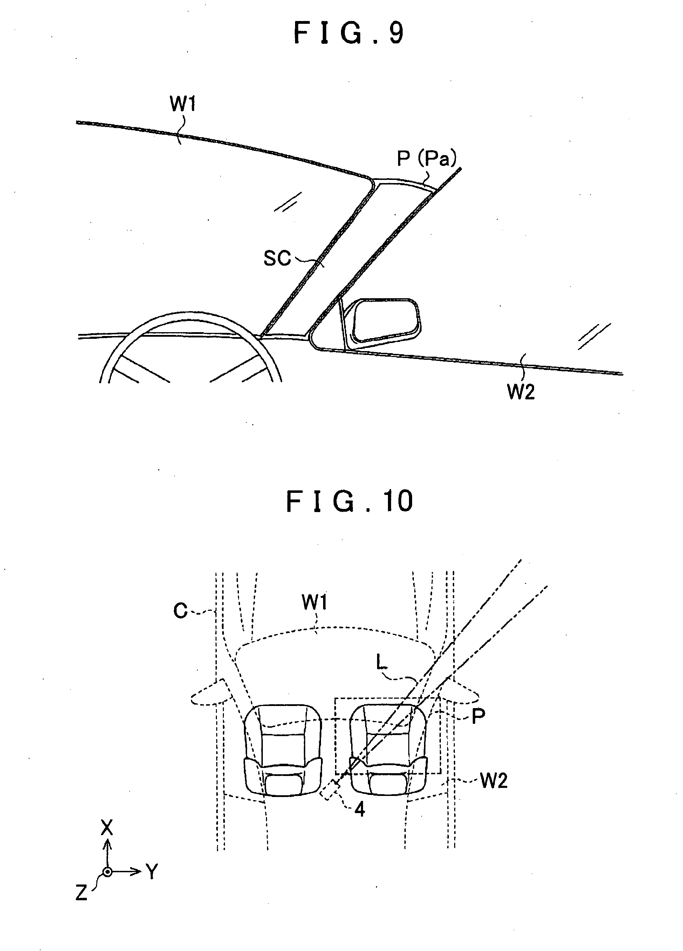

The projector 4, as FIG. 8 shows, is attached to the inner side of the roof R upwardly near the vertical direction of the front seat F where the driver D sits, and attached so as to be capable of projecting an image on the inner surface of the pillar P on the right side of the vehicle C. Referring to FIG. 9, a screen SC that is cut so as to fit the shape of the pillar P is applied to the inner side surface Pa of the pillar P. The focal point of the projector 4 is adjusted to align with the screen SC. It should also be noted that the screen SC may be omitted in cases where the inner side surface Pa of the pillar P is formed with a material and shape enabling the reception of projection light output from the projector 4, as well as the display of a sharp image.

As FIG. 10 shows, the projector 4 radiates a projection light L to the screen SC of the pillar P. In addition, an image is not projected to a front windshield W 1 or a door window W2 around the screen SC due to the mask 40b.

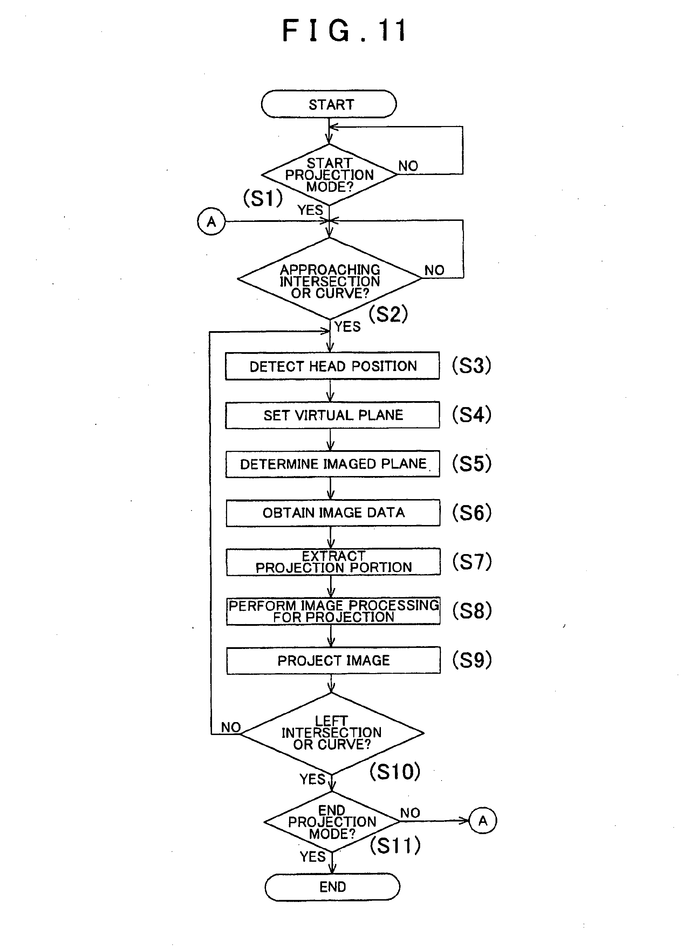

A processing procedure according to the present embodiment will be explained next with reference to FIG. 11. First, the control portion 10 of the driving support unit 2 waits for the start of a projection mode that projects a background image on the inner side of the pillar P (step S1). For example, the start of the projection mode is determined when a touch panel or the operation switch 26 has been operated and the control portion 10 receives a mode start request via the external input I/F portion 25. Alternatively, the start of the projection mode may be determined based on an ON signal from an ignition module (not shown).

If it is determined that the projection mode is started (YES at step S1), then the control portion 10 waits for the vehicle C to approach an intersection or a curve, based on the route data 16 (step S2). More specifically, if the control portion 10 determines that the present position of the vehicle C is advancing within a predetermined distance range (e.g. 200 meters) from an intersection including a T-road or a curve with at least a predetermined curvature, then the control portion 10 determines that the vehicle C has approached the intersection or curve.

If it is determined that the vehicle C has approached an intersection or curve (YES at step S2), then the control portion 10 uses the respective position detecting sensors 8a to 8c to detect the head position of the driver D (step S3). At this time, the control portion 10 obtains the respective relative distances from the position detecting sensors 8a to 8c to the head portion D1, via the sensor I/F portion 23. Then, using the respective relative distances, the control portion 10 identifies the head center position Dc based on the principles of triangulation.

Once the head center position Dc is calculated, the image processor 20 sets the virtual plane VP, as described above (step S4). When the vehicle C approaches an intersection J (see FIG. 4), then the reference point Pc of the crosswalk Z is obtained based on the map depiction data 17, and the virtual plane VP is set at a position that passes through the reference point Pc. If there is no crosswalk Z, then a road marking such as a stop line in front of the vehicle may be used. When the vehicle C is approaching a curve, a reference point Pc may be obtained at a position with the largest curvature among a center line marked on the road.

In addition, the image processor 20 sets the imaged plane CP (step S5). At this time, as described above, the image processor 20 compares the angle θc of the optical axis AX of the camera 6 and the angle θd of the center line La linking the head center position Dc and the reference point Pc. As FIG. 5 shows, if the angle θc of the optical axis AX is larger than the angle θd of the center line La (θc<θd), then the image processor 20 sets the imaged plane CP at a position in front of the virtual plane VP that passes through the right end point VP2 of the virtual plane VP. At this time, as shown in FIG. 5, by separating the left end point VP1 and the imaged plane CP, a non-displayed area B 1 is created in the blind spot area A blocked by the pillar P, which cannot be projected on the pillar P. Although the non-displayed area B1 is a narrow region, when an image is displayed on the pillar P, the continuity is somewhat disrupted between the image displayed on the pillar P and the actual background visible through the windows W1, W2. Meanwhile, the right end point VP2 contacts the imaged plane CP. Therefore, the non-display area B 1 is not created and better continuity of the image is achieved compared to when non-display areas B1 exist at both ends.

Moreover, since the imaged plane CP is set to a position that is closer to the head center position Dc of the driver D than the virtual plane VP, there is no excess area not projected on the pillar P generated among the image taken aligned with the focal point.

Also, as FIG. 6 shows, if the angle θc of the optical axis AX is smaller than the angle θd of the center line La (θc<θd), then the image processor 20 sets the imaged plane CP at a position that passes through the left end point VP1 of the virtual plane VP. At this time, the left end point VP1 and the imaged plane CP are in contact. Therefore, the non-displayed area B1 is not generated at the left end point VP1.

After the imaged plane CP is set, based on the imaged plane CP set by the image processor 20, the camera 6 aligns the focal point with the imaged plane CP for imaging to obtain the image data IM (step S6).

Once the image processor 20 obtains the image data IM, as described above, the projection portion CP1 to be projected on the virtual plane VP is extracted from among the image data IM (step S7) and the pillar blind spot data BD is generated.

Following generation of the pillar blind spot data BD, the image processor 20 performs image processing to project the pillar blind spot data BD (step S8). More specifically, as described above, the pillar blind spot data BD is transformed for projection on the virtual plane VP set at step S4. The image subject to projection transformation on the virtual plane VP undergoes further transformation to fit the three-dimensional shape of the pillar P, based on the pillar shape 41. The image transformed to fit the three-dimensional shape of the pillar P is then subject to coordinate transformation based on the position of the projector 4 to generate the projection data PD. Additionally, based on the projection data PD and the mask pattern 40, the output data OD masking regions other than the pillar P are generated.

Once the output data OD is generated, the image processor 20 outputs such output data OD to the projector 4. The projector 4, as FIG. 10 shows, projects the image of the region blocked by the pillar P on the screen SC, which is provided on the inner side surface Pa of the pillar P (step S9). The projected image displayed on the screen SC undergoes projection transformation onto the virtual plane VP in line with a road marking such as the crosswalk Z in advance. Therefore, the road marking is displayed without offsetting or skewing along with the background visible through the front windshield W1 and the door window W2. Furthermore, by placing the imaged plane CP in contact with either of the end points VP1, VP2 of the virtual plane VP, it is possible to reduce the non-display area B1 and the excess area generated by offset between the virtual plane VP and the imaged plane CP, which improves continuity with the background visible through the windows W1, W2.

After the image is projected on the pillar P by the image processor 20, the control portion 10 determines whether the vehicle C has left the intersection J or the curve (step S10). If it is determined that the vehicle C is still near the intersection J or inside the curve (NO at step S10), then the control portion 10 returns to step S3 and repeats the processing from head position detection (step S3) to image projection (step S9). In other words, the image blocked by the pillar P is projected onto the pillar P until the vehicle C leaves the intersection J or the curve.

If it is determined that the vehicle C has left the intersection J or the curve (YES at step S10), then the control portion 10 determines whether to end the projection mode (step S11). An end trigger is a mode end request made by operation of the touch panel or the operation switch 26, or an OFF signal from the ignition module. Following the input of these signals, the control portion 10 determines the end of the projection mode (YES at step S11) and ends the processing.

According to the above embodiment, the following effects can be obtained.
(1) In the above embodiment, the image processor 20 sets the virtual plane VP at a position that passes through the reference point Pc of a targeted object, e.g. a road marking, when the vehicle C approaches an intersection or curve. In addition, the imaged plane CP from the camera 6 is set at a position in front of the virtual plane VP that passes through the end points VP 1, VP2 of the virtual plane VP. Thus, regardless of being in the blind spot area A blocked by the pillar P, it is possible to reduce the non-displayed area B1 that cannot be projected on the pillar P and possible to reduce the excess area among the image aligned with the focal point that cannot be projected on the pillar P. As a consequence, a natural image that looks normal can be displayed on the pillar P while achieving high continuity with the actual background visible through the respective windows W1, W2.
(2) In the above embodiment, the angle θc formed by the optical axis AX of the camera 6 and the horizontal direction is compared with the angle θd formed by the blind spot direction of the blind spot area A and the horizontal direction. If the angle θc is larger than the angle θd, then the imaged plane CP is set at a position that passes through the right end point VP2. Meanwhile, if the angle θc is smaller than the angle θ d, then the imaged plane CP is set at a position that passes through the left end point VP 1. As a consequence, the imaged plane CP can always be set in front of the virtual plane VP. Therefore, it is possible to reduce the excess area created when the imaged plane CP is set at a position farther away from the head center position Dc than the virtual plane VP.

Note that the above embodiment may be modified in the following manner.
- In the above embodiment, the reference point Pc of the road marking is set based on the map depiction data 17. However, white line recognition processing may be performed on the image data IM obtained from the camera 6 to detect the white line (or yellow line) of the road marking. The reference point Pc may then be set at the end or center of the detected white line.

- In the above embodiment, the virtual plane VP is aligned to a road marking such as the crosswalk Z. However, the targeted object to which the virtual plane VP is aligned may be changed as appropriate. For example, the virtual plane VP may be aligned with a road installation object such as a traffic signal. As another example, the virtual plane VP may be aligned with an obstacle when a targeted object such as a pedestrian or a bicycle are detected. In this case, such detection is performed by a radar or the like mounted on the vehicle C, which serves as an obstacle detecting mechanism that measures a relative distance to a forward obstacle. It should be noted that known image processing such as feature detection can be used to determine whether the obstacle is a pedestrian or bicycle, for example.

- Data indicating the position of a road marking such as a crosswalk may be obtained from a server that distributes such data or from road-to-vehicle communication or vehicle-to-vehicle communication. Furthermore, data indicating the position of obstacles such as pedestrians may be received from an external device of another vehicle or the like.

- In the above embodiment, the sound processor 24 may be omitted if voice guidance is not used.

- In the above embodiment, an image is projected onto the inner side surface Pa of the pillar P by the projector 4. However, a display serving as a thin display mechanism may be provided on the inner side of the pillar P, and the output data OD may be output to the display from the image processor 20.

- In the above embodiment, the camera 6 is provided on an outer side of the front pillar P, and images an area blocked by the front pillar P. However, the camera 6 may be provided on another pillar, such as one toward the side or back of the vehicle. For example, the camera 6 may be attached to an outer side of a rear pillar toward the back of the vehicle and used to image an area blocked by the rear pillar. In such case, the projector 4 is provided at a position capable of projecting an image on an inner surface of the rear pillar, and the image processor 20 projects an image of a blind spot area blocked by the rear pillar on the inner surface of the rear pillar, based on image data taken by the camera 6. Thus, when the vehicle C is backing into a parking space, for example, the driver can use the projected image to check the portion of the parking space blocked by the rear pillar, thereby facilitating the parking operation. In addition, a plurality of cameras 6 may be respectively provided on each outer side of a plurality of pillars P, and a plurality of projectors 4 may be provided in accordance with the positions of the cameras 6. Furthermore, a plurality of cameras 6 may also be provided on one pillar P.

- In the above embodiment, the projector 4 is provided on the inner side of the roof R of the vehicle C. However, the position of the projector 4 may be arbitrarily set provided that it is a position at which the projector 4 can project an image on the inner surface of the pillar P. For example, the projector 4 may be provided (generally centered) on top of a dashboard or at another position.
It is explicitly stated that all features disclosed in the description and/or the claims are intended to be disclosed separately and independently from each other for the purpose of original disclosure independent of the compositions of the features in the embodiments and/or the claims. It is explicitly stated that all value ranges or indications of groups of entities disclose every possible intermediate value or intermediate entity for the purpose of original disclosure, in particular as limits of value ranges.

## Claims

1. A driving support method adapted for using an imaging device (6) attached to a vehicle (C) for imaging a blind spot area (A) created by a pillar (P) of the vehicle (C) and for displaying an image corresponding to the blind spot area (A) on an inner side of the pillar (P), the driving support method being **characterised by** comprising the steps of:
setting a virtual plane (VP) for projecting image data input from the imaging device (6), and setting an imaged plane (CP) of the imaging device (6) at a position that passes through an end point (VP1, VP2) of the virtual plane (VP1) defined by the blind spot area (A) created by the pillar (P); and
obtaining image data for which the imaged plane (CP) is aligned with a focal point of a projector (4) and subjecting the image data to coordinate transformation on the virtual plane (VP), and displaying an image corresponding to the blind spot area (A) created by the pillar (P) on the inner side of the pillar (P) based on the image data subject to coordinate transformation on the virtual plane (VP).

2. A driving support method according to claim 1, comprising the steps of:
obtaining a position of a depicted reference object (Pc) on a road surface around the vehicle (C) and setting the virtual plane (VP) at a position that passes through the position of the depicted reference object (Pc), and
selecting the end point of the virtual plane (VP) to intersect with the imaged plane (CP), based on an orientation of an optical axis (Ax) of the imaging device and an orientation of a linear line linking a head position of a driver (D) of the vehicle and the position of the depicted reference object (Pc).

3. A driving support device adapted for using an imaging device (6) attached to a vehicle (C) for imaging a blind spot area (A) created by a pillar (P) of the vehicle (C) and for displaying an image taken by the imaging device (6) on an inner side (Sc) of the pillar (P), **characterised by** the driving support device comprising:
a virtual plane setting mechanism (20) adapted for setting a virtual plane for projecting image data input from the imaging device (6);
an imaged plane setting mechanism (20) adapted for setting an imaged plane (Cp) of the imaging device (6) at a position that passes through an end point (VP1, VP2) of the virtual plane (VP) defined by the blind spot area (A) created by the pillar (P);
an image processing mechanism (20) adapted for obtaining image data for which the imaged plane (CP) is aligned with a focal point of a projector (4) and for subjecting image data to coordinate transformation on the virtual plane (VP); and
an output control mechanism (20) adapted for displaying an image of the blind spot area (A) created by the pillar (8) on the inner side (Sc) of the pillar, based on the image data subject to coordinate transformation on the virtual plane (VP).

4. A driving support device according to claim 3, wherein
the virtual plane setting mechanism (20) obtains a position of a depicted reference object (Pc) on a road surface around the vehicle (C) and sets the virtual plane (VP) at a position that passes through the position of the depicted reference object, and
the imaged plane setting mechanism selects the end point of the virtual plane (VP) to intersect with the imaged plane (CP), based on an orientation of an optical axis (Ax) of the imaging device (6) and an orientation of a linear line linking a head position of a driver of the vehicle and the position of the depicted reference object.

5. The driving support device according to claim 3 or 4, wherein
the imaged plane setting mechanism sets the imaged plane of the imaging device at a position closer to the vehicle than the virtual plane.

## Patentansprüche

1. Fahrunterstützungsverfahren, das angepasst ist zur Verwendung einer Bildgebungsvorrichtung (6), die an einem Fahrzeug (C) angebracht ist, zum Aufnehmen eines toten Winkelbereichs (A), der durch eine Säule (P) des Fahrzeugs (C) erzeugt wird, und zum Anzeigen eines Bilds, das dem toten Winkelbereich (A) entspricht, auf einer inneren Seite der Säule (P), wobei das Fahrunterstützungsverfahren **gekennzeichnet ist durch** die Schritte:
Festlegen einer virtuellen Ebene (VP) zum Projizieren von Bilddaten, die von der Bildgebungsvorrichtung (6) eingegeben werden, und Setzen einer Abbildungsebene (CP) der Bildgebungsvorrichtung (6) an einer Position, die **durch** einen Endpunkt (VP1, VP2) der virtuellen Ebene (VP1) verläuft, die definiert ist **durch** den toten Winkelbereich (A), der **durch** die Säule (P) erzeugt wird; und
Erlangen von Bilddaten für die die Abbildungsebene (CP) mit einem Fokuspunkt eines Projektors (4) ausgerichtet ist, und Unterwerfen der Bilddaten einer Koordinatentransformation auf die virtuelle Ebene (VP) und Anzeigen eines Bilds, das dem toten Winkelbereich (A) entspricht, der **durch** die Säule (P) erzeugt wird, auf der inneren Seite der Säule (P) basierend auf den Bilddaten, die der Koordinatentransformation auf die virtuelle Ebene (VP) unterworfen worden sind.

2. Fahrunterstützungsverfahren nach Anspruch 1, enthaltend die Schritte:
Erlangen einer Position eines dargestellten Referenzobjekts (Pc) auf einer Straßenoberfläche um das Fahrzeug (C) herum, und Festlegen der virtuellen Ebene (VP) an einer Position, die durch die Position des dargestellten Referenzobjekts (Pc) verläuft, und
Auswählen des Endpunkts der virtuellen Ebene (VP), um die Abbildungsebene (CP) zu kreuzen, basierend auf einer Orientierung einer optischen Achse (Ax) der Bildgebungsvorrichtung und einer Orientierung einer geraden Linie, die eine Kopfposition eines Fahrers (D) des Fahrzeugs und die Position des dargestellten Referenzobjektes (Pc) verbindet.

3. Fahrunterstützungsvorrichtung, die angepasst ist zur Verwendung einer Bildgebungsvorrichtung (6), die an einem Fahrzeug (C) angebracht ist zum Abbilden eines toten Winkelbereichs (A), der durch eine Säule (P) des Fahrzeugs (C) erzeugt wird, und zum Anzeigen eines Bilds, das von der Bildgebungsvorrichtung (6) aufgenommen wird, auf einer inneren Seite (Sc) der Säule (P), **dadurch gekennzeichnet, dass** die Fahrunterstützungsvorrichtung enthält:
einen virtuelle-Ebene-Festlegungsmechanismus (20), der angepasst ist zum Festlegen einer virtuellen Ebene zum Projizieren von Bilddaten, die von der Bildgebungsvorrichtung (6) eingegeben werden;
einen Abbildungsebene-Festlegungsmechanismus (20), der angepasst ist zum Festlegen einer Abbildungsebene (Cp) der Bildgebungsvorrichtung (6) an einer Position, die durch einen Endpunkt (VP1, VP2) der virtuellen Ebene (VP) verläuft, die durch den toten Winkelbereich (A) definiert ist, der durch die Säule (P) erzeugt wird;
einen Bildverarbeitungsmechanismus (20), der angepasst ist zum Erlangen von Bilddaten für die die Abbildungsebene (CP) mit einem Fokuspunkt eines Projektors (4) ausgerichtet ist, und zum Unterwerfen der Bilddaten einer Koordinatentransformation auf die virtuelle Ebene (VP); und
einen Ausgabesteuerungsmechanismus (20), der angepasst ist zum Anzeigen eines Bilds des toten Winkelbereichs (A), der durch die Säule (8) erzeugt wird, auf der inneren Seite (Sc) der Säule, basierend auf den Bilddaten, die der Koordinatentransformation auf die virtuelle Ebene (VP) unterworfen wurden.

4. Fahrunterstützungsvorrichtung nach Anspruch 3, wobei
der virtuelle-Ebene-Festlegungsmechanismus (20) eine Position eines dargestellten Referenzobjekts (Pc) auf einer Straßenoberfläche um das Fahrzeug (C) herum erlangt und die virtuelle Ebene (VP) an einer Position festlegt, die durch die Position des dargestellten Referenzobjekts verläuft, und
der Abbildungsebene-Festlegungsmechanismus den Endpunkt der virtuellen Ebene (VP) auswählt, um die Abbildungsebene (CP) zu kreuzen, basierend auf einer Orientierung einer optischen Achse (Ax) der Bildgebungsvorrichtung (6) und einer Orientierung einer geraden Linie, die eine Kopfposition eines Fahrers des Fahrzeugs und die Position des dargestellten Referenzobjekts verbindet.

5. Fahrunterstützungsvorrichtung nach Anspruch 3 oder 4, bei der
der Abbildungsebene-Festlegungsmechanismus die Abbildungsebene der Bildgebungsvorrichtung an einer Position festlegt, die näher zu dem Fahrzeug ist als zu der virtuellen Ebene.

## Revendications

1. Procédé d'aide à la conduite adapté à l'utilisation d'un appareil d'imagerie (6) fixé à un véhicule (C) afin de restituer sous forme d'image une zone d'angle mort (A) créée par un montant (P) du véhicule (C) et afin d'afficher une image correspondant à la zone d'angle mort (A) au niveau d'un côté intérieur du montant (P), le procédé d'aide à la conduite étant **caractérisé en ce qu'**il comprend les étapes consistant à :
établir un plan virtuel (VP) afin de projeter des données d'image entrées à partir du dispositif d'imagerie (6) et établir un plan restitué sous forme d'image (CP) de l'appareil d'imagerie (6) au niveau d'une position passant par un point d'extrémité (VP1, VP2) du plan virtuel (VP1) défini par la zone d'angle mort (A) créée par le montant (P) ; et
obtenir des données d'image pour lesquelles le plan restitué sous forme d'image (CP) est aligné par rapport à un point focal d'un projecteur (4) et soumettre les données d'image à une transformation de coordonnées au niveau du plan virtuel (VP), et afficher une image correspondant à la zone d'angle mort (A) créée par le montant (P) au niveau du côté intérieur du montant (P) sur la base des données d'image soumises à la transformation de coordonnées au niveau du plan virtuel (VP).

2. Procédé d'aide à la conduite selon la revendication 1, comprenant les étapes consistant à :
obtenir une position d'un objet de référence représenté (Pc) sur une surface de roulement autour du véhicule (C) et établir le plan virtuel (VP) au niveau d'une position passant par la position de l'objet de référence représenté (Pc), et
sélectionner le point d'extrémité du plan virtuel (VP) afin de couper le plan représenté sous forme d'image (CP), sur la base d'une orientation d'un axe optique (Ax) de l'appareil d'imagerie et d'une orientation d'une ligne linéaire faisant le lien entre une position de la tête d'un conducteur (D) du véhicule et la position de l'objet de référence représenté (Pc).

3. Dispositif d'aide à la conduite adaptée à l'utilisation d'un appareil d'imagerie (6) fixé à un véhicule (C) afin de restituer sous forme d'image une zone d'angle mort (A) créée par un montant (P) du véhicule (C) et afin d'afficher une image prise par le dispositif d'imagerie (6) au niveau d'un côté intérieur (Sc) du montant (P), **caractérisé en ce que** le dispositif d'aide à la conduite comprend les éléments suivants :
un mécanisme d'établissement (20) de plan virtuel adapté à l'établissement d'un plan virtuel afin de projeter des données d'image entrées à partir du dispositif d'imagerie (6) ;
un mécanisme d'établissement (20) de plan restitué sous forme d'image adapté à l'établissement d'un plan restitué sous forme d'image (Cp) du dispositif d'imagerie (6) au niveau d'une position passant par un point d'extrémité (VP1, VP2) du plan virtuel (VP) défini par la zone d'angle mort (A) créée par le montant (P) ;
un mécanisme de traitement d'images (20) adapté à l'obtention de données d'image pour lesquelles le plan restitué sous forme d'image (CP) est aligné par rapport au point focal du projecteur (4) et à la soumission des données d'image à une transformation de coordonnées au niveau du plan virtuel (VP) ; et
un mécanisme de contrôle de sortie (20) adapté à l'affichage d'une image de la zone d'angle mort (A) créée par le montant (8) au niveau du côté intérieur (Sc) du montant, sur la base des données d'image soumises à une transformation de coordonnées au niveau du plan virtuel (VP).

4. Dispositif d'aide à la conduite selon la revendication 3, où
le mécanisme d'établissement (20) de plan virtuel obtient une position d'un objet de référence représenté (Pc) sur une surface de roulement autour du véhicule (C) et établit le plan virtuel (VP) au niveau d'une position passant par la position de l'objet de référence représenté (Pc), et
le mécanisme d'établissement de plan restitué sous forme d'image sélectionne le point d'extrémité du plan virtuel (VP) afin de couper le plan restitué sous forme d'image (CPsur la base de l'orientation d'un axe optique (Ax) du dispositif d'imagerie (6) et de l'orientation d'une ligne linéaire faisant le lien entre la position de la tête du conducteur du véhicule et la position de l'objet de référence représenté.

5. Dispositif d'aide à la conduite conformément à la revendication 3 ou 4, où le mécanisme d'établissement d'un plan restitué sous forme d'image établit le plan restitué sous forme d'image de l'appareil d'imagerie au niveau d'une position plus proche du véhicule que le plan virtuel.
